(19) Europäisches Patentamt
European Patent Office
Office européen des brevets

(11) EP 4 456 173 A1

(12) # EUROPEAN PATENT APPLICATION

(43) Date of publication:
**30.10.2024 Bulletin 2024/44**

(21) Application number: **24162505.2**

(22) Date of filing: **08.03.2024**

(51) International Patent Classification (IPC):
***H01M 4/133*** (2010.01) ***C08F 220/06*** (2006.01)
***C08F 220/46*** (2006.01) ***H01M 4/134*** (2010.01)
***H01M 4/36*** (2006.01) ***H01M 4/38*** (2006.01)
***H01M 4/62*** (2006.01) ***H01M 10/0525*** (2010.01)
*H01M 4/02* (2006.01)

(52) Cooperative Patent Classification (CPC):
**H01M 4/622; C08F 220/06; C08F 220/46; H01M 4/133; H01M 4/134; H01M 4/366; H01M 4/386; H01M 4/625; H01M 10/0525;**
H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 KR 20230055671**

(71) Applicant: **Samsung SDI Co., Ltd.**
**Yongin-si, Gyeonggi-do 17084 (KR)**

(72) Inventors:
- **JUNG, Kyunghwa**
  **17084 Yongin-si (KR)**
- **LEE, Kukjoo**
  **17084 Yongin-si (KR)**
- **LEE, Jungmin**
  **17084 Yongin-si (KR)**
- **CHO, Yunshik**
  **17084 Yongin-si (KR)**
- **CHO, Minho**
  **17084 Yongin-si (KR)**
- **KIM, Hana**
  **17084 Yongin-si (KR)**

(74) Representative: **Marks & Clerk LLP**
**15 Fetter Lane**
**London EC4A 1BW (GB)**

(54) **NEGATIVE ELECTRODE FOR RECHARGEABLE LITHIUM BATTERY AND RECHARGEABLE LITHIUM BATTERY INCLUDING SAME**

(57) A negative electrode for a rechargeable lithium battery and a rechargeable lithium battery including the same are provided. The negative electrode includes a SiC composite negative electrode active material and a binder, wherein the binder includes a first binder that is an acrylic copolymer. The acrylic copolymer includes a first acrylic acid monomer, a second acrylonitrile monomer, and a third (meth)acrylate monomer, the first acrylic acid monomer includes acrylic acid substituted with a lithium ion, and the third (meth)acrylate monomer is a (meth)acrylate monomer including an ethylene glycol group and has a weight average molecular weight (Mw) of less than about 900 g/mol.

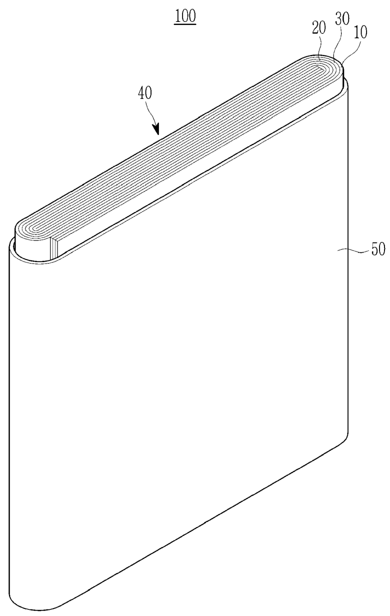


EP 4 456 173 A1

## Description

### 1. Field of the Invention

According to one or more embodiments, the present disclosure relates to a negative electrode for a rechargeable lithium battery and a rechargeable lithium battery including the same.

### 2. Description of the Related Art

Recently, with technology development and increased demand for automotive batteries, the need for a silicon-containing negative electrode active material is emerging to meet the demand of improved current density and high capacity of rechargeable lithium batteries utilized in automobiles.

However, performance of the silicon-containing negative electrode active material may be complicated and the battery may not function as required. Contraction and expansion of silicon during the charge and discharge may cause volume changes of an electrode, which leads to a disfunction of separation between electrode active materials and/or between an electrode active material and a current collector. As a result, performance of the battery may be impacted by the effects of deteriorating charge and/or discharge capacity.

Accordingly, there is an urgent need to develop an expansion-reducing binder capable of preventing or reducing structural collapse of the electrode during the charge and discharge.

On the other hand, in order to improve battery performance, development of rapid-charging batteries is also actively underway. However, during the rapid-charging, a cycle-life of the batteries generally may be shortened, which also deteriorates capacity. In order to address these concerns, materials and battery designs that may lower internal resistance of the batteries are required (or may be desired), of which development of a low-resistance binder for a negative electrode is actively underway (or being pursued).

### SUMMARY

Aspects of some embodiments are directed toward a negative electrode for a rechargeable lithium battery that may minimize or reduce a volume change of the negative electrode that occurs during charging and discharging and reduce battery resistance, thereby exhibiting (or providing) excellent or suitable cycle-life characteristics and excellent or suitable output characteristics.

Aspects of some embodiments are directed toward a rechargeable lithium battery including the negative electrode.

Some embodiments provide a negative electrode for a rechargeable lithium battery including a Si-C composite negative electrode active material (i.e., Si-C composite); and a binder, the binder is an acrylic copolymer (e.g., the binder comprises a first binder that is an acrylic polymer), the acrylic copolymer includes a first acrylic acid monomer, a second acrylonitrile monomer, and a third (meth)acrylate monomer. In some embodiments, the first acrylic acid monomer includes an acrylic acid substituted with a lithium ion, the third (meth)acrylate monomer includes an ethylene glycol group, and a weight average molecular weight (Mw) of the third (meth)acrylate monomer is at most (e.g., less than) about 900 g/mol.

The Si-C composite may include silicon and amorphous carbon. In some embodiments, the Si-C composite may include silicon, crystalline carbon, and amorphous carbon.

An amount of the second acrylonitrile monomer may be about 20 wt% to about 50 wt% based on 100 wt% of the total acrylic copolymer.

The weight average molecular weight (Mw) of the third (meth)acrylate monomer may be about 300 g/mol to about 600 g/mol.

The acrylic acid substituted with the lithium ion may have a degree of lithium ion substitution (Li/AA) of about 40 mol% to about 80 mol%.

A weight ratio of the first acrylic acid monomer, the second acrylonitrile monomer, and the third (meth)acrylate monomer may be about 45 to 60 : about 25 to 45 : about 5 to 30.

The third (meth)acrylate monomer may be a polyethylene glycol methyl ether methacrylate monomer.

According to some embodiments, a rechargeable lithium battery includes a negative electrode including the negative electrode active material; a positive electrode; and an electrolyte.

At least some of the above and other features of the invention are set out in the claims.

The negative electrode according to some embodiments may exhibit a reduced negative electrode expansion rate during charging and discharging.

## BRIEF DESCRIPTION OF THE DRAWING

The drawing (FIG. 1) is a schematic view showing a rechargeable lithium battery according to some embodiments of the present disclosure.

## DETAILED DESCRIPTION

Hereinafter, specific embodiments will be described in more detail with reference to the attached drawing so that those of ordinary skill in the art may easily implement them. However, this disclosure may be embodied in many different forms and is not construed as limited to the embodiments set forth herein. Rather, the present disclosure is intended to cover all modifications, equivalents, and alternatives falling within the scope of the present disclosure. Accordingly, the embodiments are merely described by referring to the drawing, to explain aspects of the present description.

The terminology utilized herein is utilized to describe embodiments only. However, these embodiments are only examples, and the present disclosure is not intended to limit the present disclosure. Rather the present disclosure is defined by the scope of claims. The singular expression includes the plural expression unless the context clearly dictates otherwise.

As utilized herein, the term "and/or" includes any and all combinations of one or more of the associated listed items. Expressions such as "at least one of," if (e.g., if (e.g., when)) preceding a list of elements, modify the entire list of elements and do not modify the individual elements of the list.

If (e.g., if (e.g., when)) it is described that an element is "on," "connected to," or "coupled to" another element, it will be understood that the element may be provided directly on another element or still another element(s) may be interposed therebetween. On the other hand, if (e.g., if (e.g., when)) it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described herein may be termed a second element, component, region, layer, or section without departing from the teachings of the present specification.

As utilized herein, the singular forms "a," "an," and "the" are intended to include the plural forms, including "at least one," unless the content (e.g., amount) clearly indicates otherwise. As used herein, expressions such as "at least one," "one of," and "selected from," if (e.g., if (e.g., when)) preceding a list of elements, should not be construed as being limited to the singular, but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As utilized herein, "a combination thereof" refers to a mixture, a laminate, a composite, a copolymer, an alloy, a blend, a reaction product, and/or the like of constituents.

As utilized herein, the term "and/or" includes any and all combinations of one or more of the associated listed items. Here, it should be understood that terms such as "include," "includes," "including," "comprise," "comprises," "comprising," "having," "has," and/or "have" are intended to designate the presence of an embodied feature, number, step, element, or a combination thereof, but it does not preclude the possibility of the presence or addition of one or more other features, numbers, steps, elements, or a combination thereof.

Throughout the specification of the present disclosure, if (e.g., when) it is said that a constituent component "includes" a certain component, this refers to that it does not exclude other components but may further include other components, unless specifically stated to the contrary.

In some embodiments, the terms "about", "substantially", "approximately", and/or the like utilized throughout the specification herein are utilized in the sense of being at or close to that value if (e.g., when) manufacturing and material tolerances inherent in the stated meaning are presented and are utilized to prevent or reduce unscrupulous infringers from taking unfair advantage of disclosures in which precise or absolute drawings are mentioned so as to aid understanding of the present disclosure. The terms "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same

numerical precision. For example, a range of "1.0 to 10.0" includes all subranges having a minimum value equal to or greater than 1.0 and a maximum value equal to or less than 10.0, such as, for example, 2.4 to 7.6. Throughout this specification, the description of "A and/or B" refers to "A or B or both (e.g., simultaneously)."

In the drawing, the thickness of layers, films, panels, regions, and/or the like, are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it may be directly on the other element or intervening elements may also be present. In contrast, if (e.g., when) an element is referred to as being "directly on" another element, there are no intervening elements present.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawing. For example, if (e.g., if (e.g., when)) a device in the drawing is turned over, elements described as "below" or "beneath" other elements or features would then be "above" or "over" the other elements or features. Thus, the example term "below" may encompass both (e.g., opposite) orientations of above and below. The device may be otherwise oriented (rotated 90 degrees or at other orientations), and the spatially relative terms utilized herein may be interpreted accordingly.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Unless otherwise defined, all terms (including chemical, technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

"Thickness" may be measured through a picture taken with an optical microscope such as a scanning electron microscope.

As utilized herein, if (e.g., when) a definition is not otherwise provided, a particle diameter may be an average particle diameter. This average particle diameter refers to an average particle diameter (D50), which is a diameter of particles with a cumulative volume of 50 volume% in the particle size distribution. If (e.g., when) the particle size is spherical, the diameter represents the particle diameter or average particle diameter, and if (e.g., when) the particle size is not spherical, the diameter may be a major axis length or an average major axis length. The average particle size (D50) may be measured by methods well suitable (known) to those skilled in the art, for example, by measuring with a particle size analyzer, a transmission electron microscope, a scanning electron microscope or field emission scanning electron microscopy (FE-SEM). In some embodiments, a dynamic light-scattering measurement device is utilized to perform a data analysis, and the number of particles is counted for each particle size range. From this, the average particle diameter (D50) value may be easily obtained through a calculation. A laser diffraction method may also be utilized. If (e.g., when) measuring by laser diffraction, more specifically, the particles to be measured are dispersed in a dispersion medium and then introduced into a commercially available laser diffraction particle size measuring device (e.g., MT 3000 available from Microtrac, Ltd.) utilizing ultrasonic waves at about 28 kHz, and after irradiation with an output of 60 W, the average particle size (D50) based on 50% of the particle size distribution in the measuring device may be calculated.

D50 refers to a particle size corresponding to a 50% cumulative volume if (e.g., if (e.g., when)) a particle size distribution measured through a laser diffraction method is calculated from particles having a smaller particle size.

D90 refers to a particle size corresponding to a 90% cumulative volume if (e.g., if (e.g., when)) a particle size distribution measured through a laser diffraction method is calculated from particles having a smaller particle size.

D10 refers to a particle size corresponding to a 10% cumulative volume if (e.g., if (e.g., when)) a particle size distribution measured through a laser diffraction method is calculated from particles having a smaller particle size.

In some embodiments, the term "group" may refer to a group (i.e., column) of elements in the periodic table of the elements according to the International Union of Pure and Applied Chemistry ("IUPAC") Groups 1-18 group classification system. In some embodiments, the term "group" may refer to a chemical functional group, e.g., an "alkyl group."

## Introduction

A negative electrode for a rechargeable lithium battery according to some example embodiments includes a Si-C composite negative electrode active material (i.e., Si-C composite) and a binder, wherein the binder is an acrylic copolymer (e.g., the binder comprises a first binder that is an acrylic polymer), and the acrylic copolymer includes a first acrylic acid monomer, a second acrylonitrile monomer, and a third (meth)acrylate monomer.

In general, Si negative electrode active materials may be unable to function as active materials due to separation between active materials, or between active materials and current collectors. The separation may be due to changes in the volume of the electrode by contracting and an expanding of volume of silicon during charging and discharging. In an effort to solve this problem, a structure in which silicon is coated with amorphous carbon has been proposed, but this approach was inadequate (e.g., difficult) to sufficiently suppress or reduce volume expansion and contraction.

## Acrylic copolymer

In some embodiments, the acrylic copolymer is included as a binder, and this binder has excellent or suitable rigidity and may provide high strength to the negative electrode. The phenomenon of expansion of the volume of the negative electrode active material during charging and discharging may be suppressed or reduced by utilizing the acrylic copolymer disclosed herein as a binder. Because the binder according to some embodiments of the present disclosure includes a third monomer having an appropriate or suitable weight average molecular weight, the binder has better affinity for the Si-C composite than crystalline carbon, and may effectively suppress or reduce volume expansion of the active material.

The term "(meth)" indicates that it may or may not include (e.g., may exclude) a methyl group. For example, (meth)acrylate refers to acrylate or methacrylate.

The acrylic acid includes an acrylic acid substituted with a lithium ion. The acrylic acid substituted with lithium ion refers to lithium acrylate including "-COOLi" in which the hydrogen of "-COOH" is substituted with lithium.

If (e.g., when) acrylic acid substituted with lithium ion is included as a negative electrode binder, battery resistance may be reduced, and thus it is appropriate or suitable.

In some embodiments, the acrylic acid may include about 40 mol% to about 80 mol% of the acrylic acid substituted with lithium ion based on 100 mol% of the total acrylic acid. For example, the acrylic acid substituted with lithium ion may have a degree of lithium ion substitution (Li/AA) of about 40 mol% to about 80 mol%. If (e.g., when) the acrylic acid substituted with lithium ion is included in the disclosed mole% range, an effect of reducing battery resistance may be further improved.

Even if (e.g., when) it is the same Group 1 element, if (e.g., when) it includes acrylic acid substituted with sodium ion instead of lithium ion, the resistance reduction effect is minimal and is not appropriate or suitable.

In some embodiments, an amount of the second acrylonitrile monomer may be about 20 wt% to about 50 wt%, about 25 wt% to about 45 wt%, or about 35 wt% to about 45 wt% based on the total 100 wt% of the acrylic copolymer. In the copolymer, if (e.g., when) the amount of the second monomer is within the disclosed range, cycle-life and output characteristics may be further improved.

The third (meth)acrylate monomer is a (meth)acrylate monomer including an ethylene glycol group, and a weight average molecular weight (Mw) of the third monomer is at most (e.g., less than) about 900 g/mol, or may be about 300 g/mol to about 600 g/mol. If (e.g., when) the weight average molecular weight (Mw) of the third (meth)acrylate monomer is at most (e.g., less than) about 900 g/mol, improved fluidity, reduced resistance, and improved lithium movement may be obtained. Weight average molecular weight (Mw) may be measured by gel permeation chromatography (GPC) available from Waters Corporation. For example, the binder is diluted with an eluent (0.2 M $NaH_2PO_4$ aqueous solution) at a concentration of 0.1 %, allowed to stand for one night, filtrated with about 0.2 $\mu$m filter, and standardized with polyethene oxide/polyethylene glycol at a measuring temperature of about 40 °C, and then weight average molecular weight is obtained.

Examples of (meth)acrylate monomers including such an ethylene glycol group may include a polyethylene glycol methyl ether methacrylate monomer.

In the copolymer according to some embodiments, a weight ratio of the first acrylic acid monomer, the second acrylonitrile monomer, and the third (meth)acrylate monomer may be about 45 to 60 : about 25 to 45 : about 5 to 30, or about 50 to 55 : about 30 to 40 : about 5 to 15. If (e.g., when) the weight ratio of the first acrylic acid monomer, the second acrylonitrile monomer, and the third (meth)acrylate monomer is within the disclosed range, the obtained copolymer has a higher degree of substitution for the Si-C composite, and thus the volume expansion of the Si-C composite may be more effectively suppressed or reduced.

In an acrylic copolymer that is a binder according to some embodiments, an amount of the second acrylonitrile

monomer is important. For example, if (e.g., when) a first binder and a second binder are included in a mixing ratio as discussed elsewhere herein, the amount of each (e.g., first binder and second binder) does not need to be limited.

The copolymer according to some embodiments is prepared by copolymerizing acrylic acid, acrylonitrile, and (meth)acrylate monomers, and this copolymerization may be performed by any method widely suitable (known) in the art.

The binder according to some embodiments is effective if (e.g., when) utilized together with a Si-C composite. This is because, as discussed elsewhere herein, Si-C composite negative electrode active materials may improve current density and increase capacity, but volume expansion occurs more severely (e.g., in SiC composites) during charging and discharging compared to carbon-based active materials. For example, because the binder according to some embodiments may more effectively suppress or reduce volume expansion, significant volume expansion of the Si-C composite negative electrode active material (i.e., Si-C composite) may be effectively suppressed or reduced. Among silicon-based negative electrode active materials, $SiO_x$ has a large number of -OH groups on the surface, so it has poor affinity with the binder according to some embodiments, and thus may not sufficiently achieve the effect of suppressing volume expansion if (e.g., when) mixed with the binder according to some embodiments.

**Si-C composite**

In some embodiments, the Si-C composite negative electrode active material (i.e., Si-C composite) may include silicon and carbon. The carbon may be crystalline carbon and/or amorphous carbon. The crystalline carbon may be natural graphite, artificial graphite, or a combination thereof. The amorphous carbon may be soft carbon, hard carbon, a mesophase pitch carbonized product, calcined coke, or a combination thereof.

For example, the Si-C composite may include silicon and amorphous carbon, or may include silicon, crystalline carbon, and amorphous carbon.

In some embodiments, the Si-C composite may include silicon and amorphous carbon.

If (e.g., when) the Si-C composite negative electrode active material (i.e., SiC composite) includes silicon and amorphous carbon, it may be an aggregate of silicon and amorphous carbon, or it may be a form including silicon and having the amorphous carbon coated on the surface of the silicon. For example, the Si-C composite negative electrode active material (i.e., Si-C composite) may be or include silicon and an amorphous carbon coating layer formed on the surface of the silicon.

In some embodiments, the Si-C composite may include secondary particles that are (each) aggregates of silicon primary particles, and an amorphous carbon coating layer is formed on a surface of the secondary particles. The amorphous carbon may also (also) be provided between the silicon primary particles, for example, the silicon primary particles may be coated with amorphous carbon. Additionally, the Si-C composite may include a core in which silicon particles (e.g., silicon primary particles) are dispersed in an amorphous carbon matrix, and with an (other or separate) amorphous carbon coating layer around (e.g., surrounding) the surface of the core.

An average particle diameter (D50) of the silicon primary particles may be about 10 nanometer (nm) to about 30 micrometer ($\mu$m), and according to some embodiments, about 10 nm to about 1000 nm, and according to some embodiments, about 20 nm to about 150 nm. If (e.g., when) the average particle diameter of the silicon primary particles (e.g., Si particles or silicon) is within the disclosed range, volume expansion that occurs during charging and discharging may be suppressed or reduced, and disconnection of the conductive path due to particle crushing during charging and discharging may be prevented or reduced.

If (e.g., when) coated with amorphous carbon, a thickness of the amorphous carbon coating layer may be about 5 nm to about 100 nm.

An amount of silicon may be about 1 wt% to about 60 wt%, or about 20 wt% to about 60 wt%, based on the total 100 wt% of the Si-C composite. For example, a mixing ratio of silicon and amorphous carbon may be about 1:99 to about 60:40 by weight, or about 20:80 to about 60:40 by weight.

In another embodiment, if (e.g., when) the Si-C composite negative electrode active material (i.e., Si-C composite) includes the silicon, the crystalline carbon, and the amorphous carbon, the silicon and the crystalline carbon may be aggregated to form aggregates, and the amorphous carbon may be coated on the aggregates. An amount of the silicon may be about 1 wt% to about 60 wt% based on the total 100 wt% of the Si-C composite negative electrode active material (i.e., Si-C composite), and according to some embodiments, it may be about 3 wt% to about 60 wt%. According to another embodiment, in the Si-C composite negative electrode active material (i.e., Si-C composite), an amount of the amorphous carbon may be about 20 wt% to about 60 wt% based on the total 100 wt% of the Si-C composite negative electrode active material (i.e., Si-C composite), and an amount of the crystalline carbon may be about 20 wt% to about 60 wt% based on the total 100 wt% of the entire Si-C composite negative electrode active material (i.e., Si-C composite).

In the negative electrode according to some embodiments, the negative electrode active material may further include a carbon-based negative electrode active material along with the Si-C composite negative electrode active material (i.e., Si-C composite). If (e.g., when) the Si-C composite negative electrode active material (i.e., Si-C composite) is utilized with the carbon-based negative electrode active material, the Si-C composite negative electrode active material

(i.e., Si-C composite) and the carbon-based negative electrode active material may be utilized in a weight ratio of about 1:99 to about 50:50. For example, the Si-C composite negative electrode active material (i.e., Si-C composite) and the carbon-based negative electrode active material may be utilized in a weight ratio of about 5:95 to about 20:80.

The carbon-based negative electrode active material may be unspecified-shaped, sheet-shaped, flake-shaped, spherical-shaped, and/or fiber-shaped natural graphite and/or artificial graphite. Examples of the amorphous carbon may be or include a soft carbon or hard carbon, a mesophase pitch carbonized product, fired coke, and/or the like.

**Negative electrode active material layer**

The negative electrode according to some embodiments includes a negative electrode active material layer including the Si-C composite negative electrode active material (i.e., Si-C composite) and a binder, and a current collector supporting the negative electrode active material layer.

The negative electrode active material layer may further include a conductive material.

In the negative electrode active material layer, an amount of the negative electrode active material may be about 95 wt% to about 98 wt% based on 100 wt% of the total negative electrode active material layer. An amount of the binder may be about 1 wt% to about 5 wt% based on 100 wt% of the total negative electrode active material layer. An amount of the conductive material may be about 1 wt% to about 5 wt% based on 100 wt% of the total negative electrode active material layer.

**Binder**

The binder may include the binder according to some embodiments as a first binder and further include an aqueous binder as a second binder. If (e.g., when) the binder includes both (e.g., simultaneously) the first binder and the second binder, a total amount of the binder may be about 1 wt% to about 5 wt% based on 100 wt% of the entire negative electrode active material layer. If (e.g., when) the binder includes both (e.g., simultaneously) the first binder and the second binder, the first binder and the second binder may be mixed in a weight ratio of about 70:30 to about 40:60. If (e.g., when) the first binder and the second binder are mixed within the ranges, a negative electrode with more excellent or suitable flexibility and adhesion may be manufactured.

The aqueous binder may be a styrene-butadiene rubber (SBR), an acrylated styrene-butadiene rubber (ABR), an acrylonitrile-butadiene rubber, an acrylic rubber, a butyl rubber, or a combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or one or more mixtures thereof.

The current collector may include one selected from among a copper foil, a nickel foil, a stainless steel foil, a titanium foil, a nickel foam, a copper foam, and a polymer substrate coated with a conductive metal, and/or one or more combinations thereof, but is not limited thereto.

**Positive electrode**

Some embodiments provide a rechargeable lithium battery including the negative electrode, a positive electrode, and an electrolyte.

The positive electrode may include a positive electrode current collector and a positive electrode active material layer formed on the positive electrode current collector.

The positive electrode active material may include lithiated intercalation compounds that reversibly intercalate and deintercalate lithium ions. For example, one or more composite oxides of a metal selected from among cobalt, manganese, nickel, and a combination thereof, and lithium may be utilized as the positive electrode active material.

In some embodiments, the positive electrode active material may be a compound represented by at least one selected from among the following chemical formulas:

$Li_aA_{1-b}X_bD_2$ (where $0.90 \leq a \leq 1.8$, $0 \leq b \leq 0.5$);
$Li_aA_{1-b}X_bO_{2-c}D_c$ (where $0.90 \leq a \leq 1.8$, $0 \leq b \leq 0.5$, $0 \leq c \leq 0.05$);
$Li_aE_{1-b}X_bO_{2-c}D_c$ (where $0.90 \leq a \leq 1.8$, $0 \leq b \leq 0.5$, $0 \leq c \leq 0.05$);
$Li_aE_{2-b}X_bO_{4-c}D_c$ (where $0.90 \leq a \leq 1.8$, $0 \leq b \leq 0.5$, $0 \leq c \leq 0.05$);
$Li_aNi_{1-b}\text{-}cCo_bX_cD_\alpha$ (where $0.90 \leq a \leq 1.8$, $0 \leq b \leq 0.5$, $0 \leq c \leq 0.5$, $0 < \alpha \leq 2$);
$Li_aNi_{1-b-c}Co_bX_cO_{2-\alpha}T_\alpha$ (where $0.90 \leq a \leq 1.8$, $0 \leq b \leq 0.5$, $0 \leq c \leq 0.5$, $0 < \alpha < 2$);
$Li_aNi_{1-b-c}Co_bX_cO_{2-\alpha}T_2$ (where $0.90 \leq a \leq 1.8$, $0 \leq b \leq 0.5$, $0 \leq c \leq 0.5$, $0 < \alpha < 2$);

$Li_aNi_{1-b-c}Mn_bX_cD_\alpha$ (where 0.90≤a≤1.8, 0≤b≤0.5, 0≤c≤0.5, 0<α≤2);
$Li_aNi_{1-b-c}Mn_bX_cO_{2-\alpha}T_\alpha$ (where 0.90≤a≤1.8, 0≤b≤0.5, 0≤c≤0.5, 0<α<2);
$Li_aNi_{1-b-c}Mn_bX_cO_{2-\alpha}T_2$ (where 0.90≤a≤1.8, 0≤b≤0.5, 0≤c≤0.5, 0<α<2);
$Li_aNi_bE_cG_dO_2$ (where 0.90≤a≤1.8, 0≤b≤0.9, 0≤c≤0.5, 0.001≤d≤0.1);
$Li_aNi_bCo_cMn_dGeO_2$ (where 0.90≤a≤1.8, 0≤b≤0.9, 0≤c≤0.5, 0≤d≤0.5, 0≤e≤ 0.1);
$Li_aNi_bCo_cAl_dGeO_2$ (where 0.90≤a≤1.8, 0≤b≤0.9, 0≤c≤0.5, 0≤d≤0.5, 0≤e≤ 0.1);
$Li_aNiG_bO_2$ (where 0.90≤a≤1.8, 0.001≤b≤0.1);
$Li_aCoG_bO_2$ (where 0.90≤a≤1.8, 0.001≤b≤0.1);
$Li_aMn_{1-b}G_bO_2$ (where 0.90≤a≤1.8, 0.001≤b≤0.1);
$Li_aMn_2G_bO_4$ (where 0.90≤a≤1.8, 0.001≤b≤0.1);
$Li_aMn_{1-g}G_gPO_4$ (where 0.90≤a≤1.8, 0≤g≤0.5);
$QO_2$; $QS_2$;$LiQS_2$; $V_2O_5$; $LiV_2O_5$; $LiZO_2$; $LiNiVO_4$;
$Li_{(3-f)}J_2(PO_4)_3$ (where 0≤f≤2);
$Li_{(3-f)}Fe_2(PO_4)_3$ (where 0≤f≤2); and
$Li_aFePO_4$ (0.90≤a≤1.8), and/or one or more combinations thereof.

In the disclosed chemical formulas,

A is selected from among Ni, Co, and Mn, and/or one or more combinations thereof;
X is selected from among Al, Ni, Co, Mn, Cr, Fe, Mg, Sr, V, and a rare earth element, and/or one or more combinations thereof;
D is selected from among O, F, S, and P, and/or one or more combinations thereof;
E is selected from among Co, and Mn, and/or one or more combinations thereof;
T is selected from among F, S, and P, and/or one or more combinations thereof;
G is selected from among Al, Cr, Mn, Fe, Mg, La, Ce, Sr, and V, and/or one or more combinations thereof;
Q is selected from among Ti, Mo, and Mn, and/or one or more combinations thereof;
Z is selected from among Cr, V, Fe, Sc, and Y, and/or one or more combinations thereof; and
J is selected from among V, Cr, Mn, Co, Ni, and Cu, and/or one or more combinations thereof.

In some embodiments, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be provided in a method having no adverse influence on properties of a positive electrode active material by utilizing these elements in the compound, and, for example, the method may include any coating method such as spray coating, dipping, and/or the like, but is not illustrated in more detail because it is well-suitable (known) in the related field.

In the positive electrode, an amount of the positive electrode active material may be about 90 wt% to about 98 wt% based on the total weight of the positive electrode active material layer.

In some embodiments, the positive electrode active material layer may further include a binder and a conductive material. Herein, the binder and the conductive material may be included in an amount of about 1 wt% to about 5 wt%, respectively based on a total amount of the positive electrode active material layer.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxidecontaining polymer, polyvinyl pyrrolidone, polyurethane, polytetrafluoroethylene, polyvinylidene fluoride, polyethylene, polypropylene, styrene-butadiene rubber, acrylated styrene-butadiene rubber, an epoxy resin, nylon, and/or the like, but is not limited thereto.

The conductive material is included to provide electrode conductivity, and any electrically conductive material may be utilized as a conductive material unless it causes a chemical change. Examples of the conductive material include a carbon-based material such as natural graphite, artificial graphite, carbon black, acetylene black, ketjen black, a carbon fiber and/or the like; a metal-based material of a metal powder or a metal fiber including copper, nickel, aluminium, silver, and/or the like; a conductive polymer such as a polyphenylene derivative; or one or more mixtures thereof.

The current collector may be Al, but is not limited thereto.

**Non-aqueous organic solvent**

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. Furthermore, the ketone-based solvent may include cyclohexanone, and/or the like. In some embodiments, the alcohol-based solvent may include ethanol, isopropyl alcohol, and/or the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, and/or the like, dioxolanes such as 1,3-dioxolane, and/or the like, sulfolanes, and/or the like.

The organic solvent may be utilized alone or in a mixture. If (e.g., when) the organic solvent is utilized in a mixture, the mixture ratio may be controlled or selected in accordance with a desirable battery performance and it may be well suitable (known) to one in the related art.

Furthermore, the carbonate-based solvent may include a mixture with a cyclic carbonate and a chain carbonate. The cyclic carbonate and chain carbonate are mixed together in a volume ratio of about 1:1 to about 1:9, and if (e.g., when) the mixture is utilized as an electrolyte, it may have enhanced performance.

The organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based solvent may be an aromatic hydrocarbon-based compound represented by Chemical Formula 1.

Chemical Formula 1

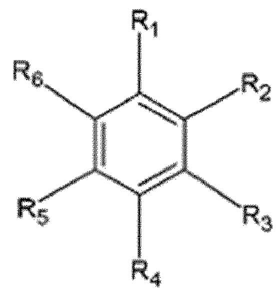

In Chemical Formula 1, $R_1$ to $R_6$ may each independently be the same or different and are selected from hydrogen, a halogen, a C1 to C10 alkyl group, a haloalkyl group (e.g., a C1 to C10 haloalkyl group), and a combination thereof.

Specific examples of the aromatic hydrocarbon-based solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and/or one or more combinations thereof.

The electrolyte may further include vinylethyl carbonate, vinylene carbonate, or an ethylene carbonate-based compound represented by Chemical Formula 2, as an additive for improving cycle-life.

Chemical Formula 2

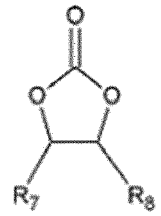

In Chemical Formula 2, $R_7$ and $R_8$ may each independently be the same or different and may each independently be hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not concurrently (e.g., simultaneously) hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate, and/or the like. If (e.g., when) utilizing more of these cycle-life enhancing additives, the amount utilized may be adjusted appropriately.

The lithium salt dissolved in an organic solvent supplies a battery with lithium ions, basically operates the rechargeable lithium battery, and improves transportation of the lithium ions between positive and negative electrodes. Examples of the lithium salt may include one or two selected from among $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$; where x and y are natural numbers, for example, integers of 1 to 20, lithium difluoro(bisoxolato) phosphate, LiCl, LiI, $LiB(C_2O_4)_2$ (lithium bis(oxalato) borate: LiBOB) and lithium difluoro(oxalate) borate (LiDFOB), as a supporting electrolytic salt, and/or one or more combinations thereof. A concentration of the lithium salt may range from about 0.1 M to about 2.0 M. If (e.g., when) the lithium salt is included at the disclosed concentration range, an electrolyte may have excellent or suitable performance and lithium ion mobility due to optimal or suitable electrolyte conductivity and viscosity.

The rechargeable lithium battery may further include a separator between the negative electrode and the positive electrode, depending on a kind of the battery. Examples of a separator material include polyethylene, polypropylene, polyvinylidene fluoride, and multi-layers having two or more layers thereof, e.g., such as a polyethylene/polypropylene double-layered separator, a polyethylene/polypropylene/polyethylene triple-layered separator, and/or a polypropylene/polyethylene/polypropylene triple-layered separator.

The drawing (FIG. 1) is an exploded perspective view of a rechargeable lithium battery according to some embodiments. The rechargeable lithium battery according to some embodiments is illustrated as a prismatic battery but is not limited thereto and may include variously-shaped batteries such as a cylindrical battery, a pouch battery, and/or the like.

Referring to the drawing, a rechargeable lithium battery 100 according to some embodiments may include an electrode assembly 40 manufactured by winding a separator 30 provided between a positive electrode 10 and a negative electrode 20 and a case 50 housing the electrode assembly 40. An electrolyte may be impregnated in the positive electrode 10, the negative electrode 20 and the separator 30.

Hereinafter, examples of the present disclosure and comparative examples are described. These examples, however, are not in any sense to be interpreted as limiting the scope of the present disclosure.

## EXAMPLES

### (Example 1)

An acrylic acid (AA) first monomer, an acrylonitrile (AN) second monomer, and a polyethylene glycol) methyl ether methacrylate (PEGMA, a weight average molecular weight (Mw) = 500 g/mol) third monomer each in an amount of 45 wt%, 25 wt%, and 30 wt%, respectively, were put in a reactor, and a VA-086 initiator (Wako Pure Chemical Industries Ltd), an AR-1025 emulsifier (DKS Co., Ltd.), and water were added to the reactor to perform a copolymerization reaction.

To the obtained copolymerization reaction product, lithium hydroxide was added and then, stirred to prepare a binder aqueous solution including a copolymer of the acrylic acid first monomer, the acrylonitrile second monomer, and the PEGMA third monomer. Herein, an amount of the lithium hydroxide was adjusted so that 60 mol% of the acrylic acid first monomer was substituted with lithium ions, and a copolymer binder obtained therefrom included lithium polyacrylate in which 60 mol% of acryl groups included in the acrylic acid first monomer was substituted with the lithium ions.

The binder aqueous solution had viscosity of 2,670 cps based on a solid content (e.g., amount) of 6 wt% at 25 °C.

1.2 wt% of the binder aqueous solution was mixed with 97.4 wt% of a negative electrode active material and 1.4 wt% of styrene-butadiene to prepare negative electrode active material slurry. Herein, the negative electrode active material was a mixed active material of artificial graphite and an Si-C composite (SCN) (a mixing ratio = 90:10 in a weight ratio). The Si-C composite included secondary particles (e.g., each) aggregated from silicon primary particles (i.e., silicon nano particles, e.g., particles in the nanometer scale) having an average particle diameter of 100 nm and a soft carbon coating layer formed on the secondary particle surface. In some embodiments, an amount of the silicon primary particles (i.e., silicon nano particles) was 40 wt% based on the total 100 wt% of the Si-C composite, and an amount of the soft carbon was 60 wt%. In addition, in some embodiments, the soft carbon coating layer had a thickness of 20 nm.
The negative electrode active material slurry was coated on a copper current collector and then, dried and rolled to manufacture a negative electrode.

**(Example 2)**

A binder aqueous solution with a viscosity of 2,870 cps at 25 °C based on a solid content (e.g., amount) of 6 wt% was prepared in substantially the same manner as in Example 1 except that the first monomer, the second monomer, and the third monomer were used utilized each in an amount of 50 wt%, 30 wt%, and 20 wt%, respectively.
The binder aqueous solution was used to manufacture a negative electrode in substantially the same manner as in Example 1.

**(Example 3)**

A binder aqueous solution with a viscosity of 3010 cps at 25 °C based on a solid content (e.g., amount) of 6 wt% was prepared in substantially the same manner as in Example 1 except that the first monomer, the second monomer, and the third monomer were used each in an amount of 55 wt%, 35 wt%, and 10 wt%, respectively.
The binder aqueous solution was used utilized to manufacture a negative electrode in substantially the same manner as in Example 1.

**(Example 4)**

A binder aqueous solution with a viscosity of 2980 cps at 25 °C based on a solid content (e.g., amount) of 6 wt% was prepared in substantially the same manner as in Example 1 except that the first monomer, the second monomer, and the third monomer were used each in an amount of 55 wt%, 40 wt%, and 5 wt%, respectively. The binder aqueous solution was used utilized to manufacture a negative electrode in substantially the same manner as in Example 1.

**(Example 5)**

A binder aqueous solution with a viscosity of 2710 cps at 25 °C based on a solid content (e.g., amount) of 6 wt% was prepared in substantially the same manner as in Example 1 except that the first monomer, the second monomer, and the third monomer were used each in an amount of 50 wt%, 45 wt%, and 5 wt%, respectively.
The binder aqueous solution was used to manufacture a negative electrode in substantially the same manner as in Example 1.

**(Comparative Example 1)**

A binder aqueous solution with a viscosity of 2150 cps at 25 °C based on a solid content (e.g., amount) of 6 wt% was prepared in substantially the same manner as in Example 1 except that the first monomer, the second monomer, and the third monomer were used each in an amount of 70 wt%, 0 wt%, and 30 wt%, respectively. In other words, the binder did not include the second monomer.
The binder aqueous solution was used to manufacture a negative electrode in substantially the same manner as in Example 1.

**(Comparative Example 2)**

A negative electrode was manufactured in substantially the same manner as in Comparative Example 1 except that $SiO_x$ (x=1) was used instead of the Si-C composite.

**(Comparative Example 3)**

A negative electrode was manufactured in substantially the same manner as in Example 3 except that $SiO_x$ (x=1) was used instead of the Si-C composite.

**Preparation Examples) Manufacture of Half cell**

Each of the negative electrodes of Examples 1 to 5 and Comparative Examples 1 to 3 was utilized with a lithium metal counter electrode and an electrolyte to manufacture a coin-type or kind half-cell. The electrolyte was prepared by dissolving 1.5 M $LiPF_6$ in ethylene carbonate, ethylmethyl carbonate, and dimethyl carbonate (in a volume ratio 20:10:70).

**Experimental Example 1) Measurement of Average Particle Size**

An average particle size of solid materials included in each slurry respectively prepared according to Examples 1 to 5 and Comparative Examples 1 to 3 was measured by using a particle size analyzer (PSA1190, Anton Paar GmbH), and the results are shown in Table 1.

**Experimental Example 2) Affinity Measurement**

Physical/chemical affinity of each of the binder aqueous solutions of Examples 1 to 5 and Comparative Examples 1 to 3 with the negative electrode active material used in Examples 1 to 5 and Comparatives Example 1 to 3 was measured by using an atomic force microscope (AFM).

Each of the prepared binders was coated on a tip of the AFM. After coating each of the active materials of Examples 1 to 5 and Comparative Examples 1 to 3 on a first target substrate and bringing this active material coated surface into contact with the binder coated surface, torsion (T) of the tip was measured (referred to as $T_{Si}$). In addition, after coating artificial graphite on a second target substrate and bringing this artificial graphite coated surface into contact with the binder coated surface, torsion (T) of the tip also was measured (referred to as $T_{Gr}$).

These measurements were used to calculate $T_{Si}/T_{Gr}$, and the results are shown in Table 1.

**Experimental Example 3) Evaluation of Negative Electrode Expansion Rate**

Each of the manufactured half-cells was 50 times charged and discharged at 0.1C, from which a negative electrode was separated to measure a negative electrode thickness. This negative electrode thickness was used with a negative electrode thickness before the charging and discharging (initial negative electrode thickness) to calculate a negative electrode expansion rate according to Equation 1. The results are shown in Table 1.

**[Equation 1]**

Negative electrode expansion rate (%) = {(negative electrode thickness after charging and discharging - initial negative electrode thickness)/initial negative electrode thickness}*100

Table 1

| | Si-based active material | Amount of acrylonitrile in copolymer(wt%) | After dispersion, average particle size (μm) | $T_{Si}/T_{Gr}$ | Negative electrode expansion rate(%) |
|---|---|---|---|---|---|
| Example 1 | SCN | 25 | 13.74 | 1.65 | 30.1 |
| Example 2 | SCN | 30 | 13.05 | 1.72 | 29.2 |
| Example 3 | SCN | 35 | 12.26 | 3.39 | 26.3 |
| Example 4 | SCN | 40 | 11.40 | 1.89 | 26.6 |
| Example 5 | SCN | 45 | 10.49 | 2.00 | 27.9 |

(continued)

| | Si-based active material | Amount of acrylonitrile in copolymer(wt%) | After dispersion, average particle size (μm) | $T_{Si}/T_{Gr}$ | Negative electrode expansion rate(%) |
|---|---|---|---|---|---|
| Comparative Example 1 | SCN | 0 | 17.18 | 1.02 | 32.6 |
| Comparative Example 2 | $SiO_x$ | 0 | 15.29 | - | 28.4 |
| Comparative Example 3 | $SiO_x$ | 35 | 16.30 | - | 32.9 |

As shown in Table 1, Examples 1 to 5 including an Si-C composite negative electrode active material and utilizing a copolymer binder including 25 wt% to 45 wt% of acrylonitrile exhibited a lower negative electrode expansion rate than Comparative Examples 1 and 3. In particular, Comparative Example 2 utilizing SiO as an Si-based active material exhibited a lower negative electrode expansion rate than Comparative Example 1 utilizing an Si-C composite, but if a copolymer binder including 35 wt% of acrylonitrile was utilized, the negative electrode expansion rate was rather increased.

**Experimental Example 4) Evaluation of Negative Electrode Adhesion**

The negative electrodes of Examples 1 to 5 and Comparative Examples 1 to 3 were measured with respect to adhesion. This adhesion test was conducted by attaching a negative electrode active material layer formed on a Cu current collector to a polyvinylchloride (PVC) double-sided adhesive tape and then, peeling off a negative electrode at 180 ° and 10 mm/min to evaluate adhesive strength with a tensile strength tester, and the results are shown in Table 2.

**Experimental Example 5) Evaluation of Cycle-life Characteristics**

Each of the manufactured half-cells was 200 times charged and discharged at 0.33 C at room temperature (25 °C) to calculate a ratio of $200^{th}$ discharge capacity to $1^{st}$ discharge capacity. The results are shown as capacity retention in Table 2.

Table 2

| | Negative electrode adhesion (gf/mm) | Capacity retention (%) |
|---|---|---|
| Example 1 | 1.15 | 86.1 |
| Example 2 | 1.18 | 87.4 |
| Example 3 | 1.25 | 89.9 |
| Example 4 | 1.26 | 88.1 |
| Example 5 | 1.24 | 87.1 |
| Comparative Example 1 | 0.98 | 81.7 |
| Comparative Example 2 | 1.09 | 84.2 |
| Comparative Example 3 | 0.97 | 80.1 |

As shown in Table 2, the negative electrodes of Examples 1 to 5 exhibited very excellent or suitable adhesion, compared with the negative electrodes of Comparative Examples 1 to 3. In addition, the half-cells respectively including the negative electrodes of Examples 1 to 5 exhibited excellent or suitable capacity retention, compared with the half-cells respectively including the negative electrodes of Comparative Examples 1 to 3.

Although the example embodiments of the present invention disclosure have been described through the above, the present invention disclosure is not limited thereto, and may be implemented by various one or more suitable modifications within the scope of the claims (and equivalents thereof) and detailed description of the present disclosure and the accompanying drawings, which also fall within the scope of the present disclosure.

## Claims

1. A negative electrode for a rechargeable lithium battery, the negative electrode comprising

   a Si-C composite negative electrode active material; and
   a binder,
   wherein the binder comprises a first binder that is an acrylic copolymer, and the acrylic copolymer comprises a first acrylic acid monomer, a second acrylonitrile monomer, and a third (meth)acrylate monomer,
   wherein the first acrylic acid monomer comprises an acrylic acid substituted with a lithium ion, and
   wherein the third (meth)acrylate monomer is a (meth)acrylate monomer comprising an ethylene glycol group and has a weight average molecular weight (Mw) of at most about 900 g/mol.

2. The negative electrode as claimed in claim 1, wherein:

   (i) the Si-C composite comprises silicon and amorphous carbon; or
   (ii) the Si-C composite comprises silicon, crystalline carbon, and amorphous carbon.

3. The negative electrode as claimed in claim 2, wherein an amount of silicon is about 1 wt% to about 60 wt% based on 100 wt% of the Si-C composite.

4. The negative electrode as claimed in any one of claims 1 to 3, wherein the Si-C composite comprises:

   an aggregate of silicon and amorphous carbon; and/or
   silicon and an amorphous carbon coating layer on a surface of the silicon.

5. The negative electrode as claimed in any one of claims 1 to 3, wherein the Si-C composite comprises secondary particles, wherein each secondary particle is an aggregate of silicon primary particles, and
   wherein an amorphous carbon coating layer is on a surface of each of the secondary particles.

6. The negative electrode as claimed in any one of claims 1 to 5, wherein an amount of the second acrylonitrile monomer is about 20 wt% to about 50 wt% based on 100 wt% of the acrylic copolymer.

7. The negative electrode as claimed in any one of claims 1 to 6, wherein a weight average molecular weight (Mw) of the third (meth)acrylate monomer is about 300 g/mol to about 600 g/mol.

8. The negative electrode as claimed in any one of claims 1 to 7, wherein the acrylic acid substituted with the lithium ion has a degree of lithium ion substitution (Li/AA) of about 40 mol% to about 80 mol%.

9. The negative electrode as claimed in any one of claims 1 to 8, wherein a weight ratio of the first acrylic acid monomer, the second acrylonitrile monomer, and the third (meth)acrylate monomer is about 45 to 60 : about 25 to 45 : about 5 to 30.

10. The negative electrode as claimed in any one of claims 1 to 9, wherein:

    (i) the third (meth)acrylate monomer is a polyethylene glycol methyl ether methacrylate monomer; and/or
    (ii) a weight ratio of the first acrylic acid monomer, the second acrylonitrile monomer, and the third (meth)acrylate monomer is about 50 to 55 : about 30 to 40 : about 5 to 15.

11. The negative electrode as claimed in any one of claims 4 to 10, wherein a thickness of the amorphous carbon coating layer is about 5 nm to about 100 nm.

12. The negative electrode as claimed in any one of claims 5 to 10, wherein a thickness of the amorphous carbon coating layer is about 5 nm to about 100 nm.

13. The negative electrode as claimed in any one of claims 5 to 10 and 12, wherein:

    (i) an average particle diameter (D50) of the silicon primary particles is about 10 nanometer (nm) to about 30 micrometer (μm); or

(ii) an average particle diameter (D50) of the silicon primary particles is about 20 nm to about 150 nm.

**14.** The negative electrode as claimed in any one of claims 1 to 13, wherein:

(i) the negative electrode comprises a negative electrode active material layer comprising the Si-C composite negative electrode active material and the binder, and an amount of the binder is about 1 wt% to about 5 wt% based on 100 wt% of the negative electrode active material layer; and/or
(ii) the binder further comprises a second binder that is an aqueous binder and a weight ratio of the first binder and the second binder is about 70:30 to about 40:60, optionally wherein: the aqueous binder is at least one of a styrene-butadiene rubber (SBR), an acrylated styrene-butadiene rubber (ABR), an acrylonitrile-butadiene rubber, an acrylic rubber, a butyl rubber, or a combination thereof.

**15.** A rechargeable lithium battery, comprising

the negative electrode of any one of claims 1 to 14;
a positive electrode; and
an electrolyte.

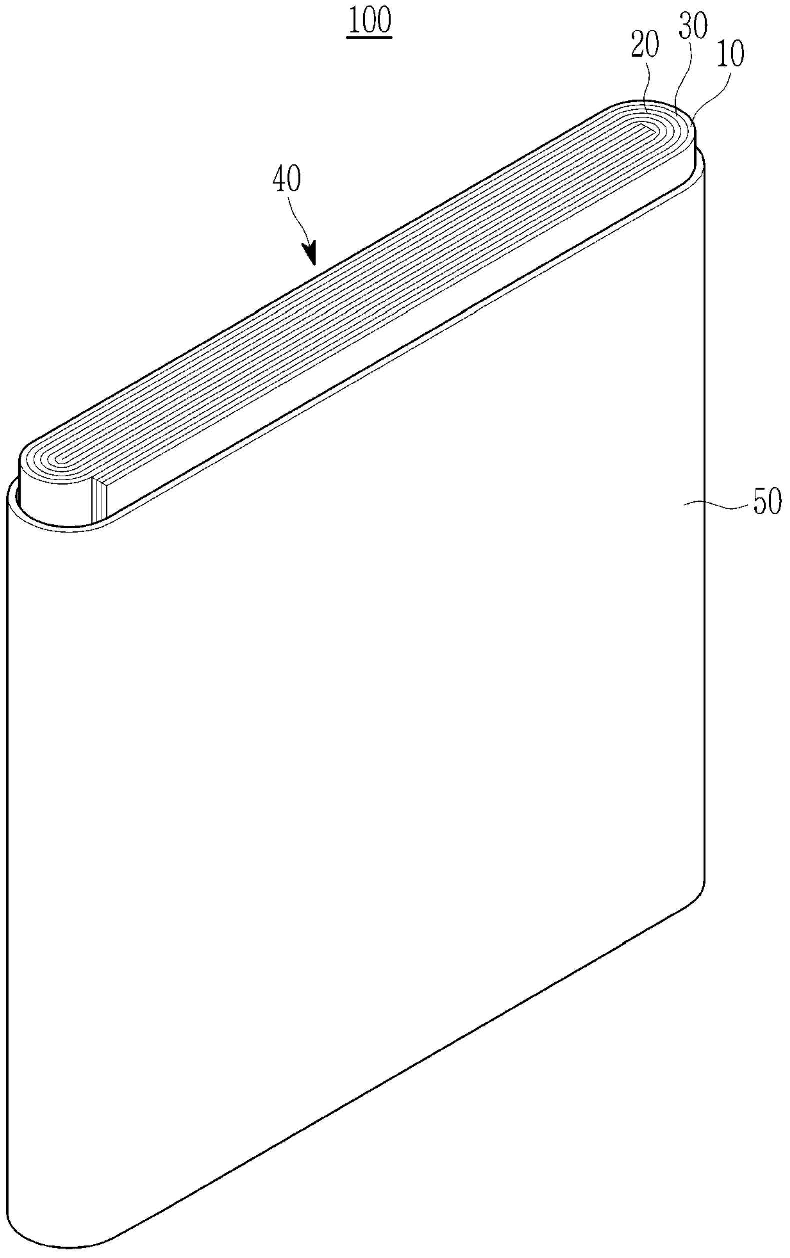
100
20
30
10
40
50

Europäisches Patentamt
European Patent Office
Office européen des brevets

# EUROPEAN SEARCH REPORT

Application Number
EP 24 16 2505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 220 775 A1 (SAMSUNG SDI CO LTD [KR]) 2 August 2023 (2023-08-02)<br>* paragraphs [0020] - [0043] *<br>* claims 1-8 *<br>----- | 1-10,14, 15 | INV.<br>H01M4/133<br>C08F220/06<br>C08F220/46<br>H01M4/134<br>H01M4/36<br>H01M4/38<br>H01M4/62<br>H01M10/0525<br><br>ADD.<br>H01M4/02 |
| X | US 2014/272574 A1 (SON DONGHO [KR] ET AL) 18 September 2014 (2014-09-18) | 1-10,14, 15 | |
| Y | * paragraphs [0022] - [0083] *<br>* examples 5, 6; table 1 *<br>----- | 11-13 | |
| X | EP 3 678 239 A1 (LG CHEMICAL LTD [KR]) 8 July 2020 (2020-07-08) | 1-10,14, 15 | |
| Y | * paragraphs [0098] - [0112] *<br>* Preparation Examples 1, 3, 4 *<br>* examples 1, 3, 4 *<br>* claim 15 *<br>----- | 11-13 | |
| X | US 2023/116454 A1 (LEE JUNGMIN [KR] ET AL) 13 April 2023 (2023-04-13) | 1-10, 13-15 | |
| Y | * paragraphs [0019] - [0092] *<br>----- | 11,12 | TECHNICAL FIELDS SEARCHED (IPC) |
| Y | US 2020/381735 A1 (OH SEYOUNG [KR] ET AL) 3 December 2020 (2020-12-03) | 11-13 | H01M<br>C08F |
| A | * paragraph [0054] *<br>----- | 1-10,14, 15 | |
| A | WO 2018/213160 A1 (3M INNOVATIVE PROPERTIES CO [US]) 22 November 2018 (2018-11-22)<br>* claims 1-3 *<br>----- | 1-15 | |

The present search report has been drawn up for all claims

2

| Place of search | Date of completion of the search | Examiner |
|---|---|---|
| Munich | 5 September 2024 | Kelly, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 2505

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | Publication date | Patent family member(s) | Publication date |
|---|---|---|---|
| EP 4220775 A1 | 02-08-2023 | EP 4220775 A1 | 02-08-2023 |
| | | KR 20230112434 A | 27-07-2023 |
| | | US 2023231109 A1 | 20-07-2023 |
| US 2014272574 A1 | 18-09-2014 | KR 20140114911 A | 30-09-2014 |
| | | US 2014272574 A1 | 18-09-2014 |
| EP 3678239 A1 | 08-07-2020 | CN 111095634 A | 01-05-2020 |
| | | EP 3678239 A1 | 08-07-2020 |
| | | ES 2925239 T3 | 14-10-2022 |
| | | JP 7062160 B2 | 06-05-2022 |
| | | JP 2020533771 A | 19-11-2020 |
| | | KR 20190030983 A | 25-03-2019 |
| | | PL 3678239 T3 | 03-10-2022 |
| | | US 2021028461 A1 | 28-01-2021 |
| | | WO 2019054816 A1 | 21-03-2019 |
| US 2023116454 A1 | 13-04-2023 | CN 116830293 A | 29-09-2023 |
| | | EP 4258381 A1 | 11-10-2023 |
| | | KR 20230050075 A | 14-04-2023 |
| | | US 2023116454 A1 | 13-04-2023 |
| | | WO 2023059108 A1 | 13-04-2023 |
| US 2020381735 A1 | 03-12-2020 | KR 20200139016 A | 11-12-2020 |
| | | US 2020381735 A1 | 03-12-2020 |
| WO 2018213160 A1 | 22-11-2018 | CN 110870104 A | 06-03-2020 |
| | | EP 3635802 A1 | 15-04-2020 |
| | | JP 7128210 B2 | 30-08-2022 |
| | | JP 2020521279 A | 16-07-2020 |
| | | KR 20200009051 A | 29-01-2020 |
| | | US 2020075934 A1 | 05-03-2020 |
| | | US 2024128436 A1 | 18-04-2024 |
| | | WO 2018213160 A1 | 22-11-2018 |

EPO FORM P0459

For more details about this annex : see Official Journal of the European Patent Office, No. 12/82